# EUROPÄISCHE PATENTSCHRIFT

(11) **EP 3 239 228 B1**
(45) Veröffentlichungstag und Bekanntmachung des Hinweises auf die Patenterteilung: **23.09.2020**
(21) Anmeldenummer: 17165090.6
(22) Anmeldetag: 05.04.2017
(51) Int. Cl.: C08K 5/42

(54) **POLYBUTYLENTEREPHTHALAT ZUSAMMENSETZUNGEN**
COMPOSITIONS OF POLYBUTYLENE TEREPHTHALATE
COMPOSITIONS DE POLYBUTYLENE TEREPHTHALATE

(30) Priorität: 28.04.2016 EP 16167451; 29.07.2016 EP 16181874
(43) Veröffentlichungstag der Anmeldung: 01.11.2017
(73) Patentinhaber: LANXESS Deutschland GmbH, 50569 Köln (DE)
(72) Erfinder: PLUTOWSKI, Ulrich, 41539 Dormagen (DE); BIENMÜLLER, Matthias, 47803 Krefeld (DE); ZIMNOL, Ralf, 51491 Overath (DE); NEUWALD, Boris, 50733 Köln (DE); SANGERMANN, Sarah, 50933 Köln (DE)

(56) Entgegenhaltungen:
- WO-A1-2016/022243
- WO-A2-02/48263
- CN-A- 104 693 745
- US-A- 4 226 961

## Beschreibung

Die Erfindung betrifft Zusammensetzungen sowie daraus herzustellende Formmassen und darauf wiederum basierende Erzeugnisse enthaltend Polybutylenterephthalat oder Polyalkylenfuranoat, Polycarbonat und wenigstens ein sekundäres Alkansulfonats.

### Stand der Technik

Aus Kunststoffe, Eigenschaften und Anwendungen, H. Domininghaus et. al. 2008, Kapitel 2.2 Synthetische Kunststoffe, Polykondensate, Seite 874, 2008, Verlag Springer (ISBN 978-3-540-72400-1) ist bekannt, dass das Lackieren von Polybutylenterephthalat (PBT) basierten Erzeugnissen mit verschiedenen Lacksystemen, wie z. B. mit Hydro-Soft-Lacken, möglich ist. Auch für die Kraftfahrzeug-Industrie sind Grundierungs- und Lacksysteme bekannt, die eine On-line-Lackierung von PBT bis 160°C gestatten.

Gemäß Standothek, Kunststoffe und ihre Lackierung, Produktbroschüre der Firma Standox, Wuppertal, D12185782 D1007 5500**,** können bei der Lackierung zahlreiche Probleme auftreten, die wiederum von einer Vielzahl von Parametern abhängig sind. Beispielhaft seien hier nur genannt eine unzureichende Vorbehandlung, ungeeignete Lösungsmittel, zu frühes Lackieren nach der Reinigung des zu lackierenden Erzeugnisses, Haftungsstörungen durch ungeeignete Haftvermittler, Verlaufsstörungen durch ungeeignete Lösungsmittel etc. PBT basierte Erzeugnisse sind vorwiegend in den Karosserieaußenteilen von Kraftfahrzeugen zu finden, insbesondere in Kotflügeln und Heckklappen, also sichtbare Fahrzeugkomponenten, wo es auf eine besonders gute Lackierung ankommt.

Aus WO 2016/022243 A1**,** WO 02/48263 A2 und US 4 226 961 A sind Zusammensetzungen enthaltend PBT, Polycarbonat (PC) sowie wenigstens ein aromatisches Sulfonat bekannt, im Einzelnen 3-(Phenylsulfonyl)benzolsulfonat Kaliumsalz, Tetrabutylphosphonium-dodecylbenzolsulphonat und 2,4,5-Trichlorbenzolsulfonat Natriumsalz.

CN 104693745 A offenbart flammgeschützte PC/PBT Mischungen die, um elektrostatische Aufladung zu verhindern, mit 40 Gew.-% Benzolsulfonat oder Alkylbenzolsulfonat additiviert werden.

Das Dokument WO 2016/022243 offenbart eine Zusammensetzung, die zwei Polycarbonate, ein Polyester, das Butylenterephthalat-einheiten aufweisen kann, und ein C₂₋₁₈ Alkansulfonat enthält.

Das Dokument CN 104 693 745 offenbart auch eine solche Zusammensetzung, wobei ein Alkybenzensulfonat verwendet wird.

Aufgabe der vorliegenden Erfindung war es, Polybutylenterephthalat (PBT) basierte Zusammensetzungen für Formmassen und darauf basierende Erzeugnisse bereitzustellen, die aufgrund ihrer chemischen Zusammensetzung das Auftreten oben beschriebener Lackierfehler reduzieren und damit einem Lackierer mehr Freiheiten bei der Auswahl des einzusetzenden Lackiersystems im Falle des Einsatzes beim elektrostatischen Spritzen (ESTA) einräumen.

### Erfindung

Lösung der Aufgabe und Gegenstand der Erfindung sind Zusammensetzungen sowie daraus herzustellende Formmassen und wiederum daraus herzustellende Erzeugnisse enthaltend
A) Polybutylenterephthalat oder Polyalkylenfuranoat, vorzugsweise Polybutylenterephthalat,
B) Polycarbonat und
C) wenigstens ein sekundäres Alkansulfonat.

Überraschenderweise zeigen auf den erfindungsgemäßen Zusammensetzungen basierende Erzeugnisse gegenüber dem Stand der Technik einen deutlich reduzierten spezifischen Oberflächenwiderstand und eignen sich daher hervorragend für Erzeugnisse die nach ihrer Herstellung einer Lackierung unterzogen werden, insbesondere für Erzeugnisse die einer Lackierung durch elektrostatisches Spritzen (ESTA) unterzogen werden. Erfindungsgemäße Erzeugnisse zeichnen sich zudem durch eine erhöhte Oberflächenspannung auf ein Niveau aus, das es erlaubt, diese Erzeugnisse in Lackierstraßen im Serienprozess mittels ESTA zu lackieren.

Zur Klarstellung sei angemerkt, dass im Rahmen dieser Erfindung alle nachfolgend aufgeführten, allgemeinen oder in Vorzugsbereichen genannten Definitionen und Parameter in beliebigen Kombinationen umfasst sind.

Der spezifische Oberflächenwiderstand ist ein Maß für die Fähigkeit, dem Oberflächenstrom zu widerstehen, der an der Oberfläche des Kunststoffformteils entlang fließt. Diese Kenngröße ist von den Umgebungsbedingungen und dem Probekörper abhängig. Bei der Bestimmung des spezifischen Oberflächenwiderstands spielen die Luftfeuchtigkeit, Verunreinigungen der Oberfläche des Probekörpers, die Probenkörpergröße sowie die Elektrodenform und -anordnung eine entscheidende Rolle. Die als elektrostatische Eigenschaften bezeichnete Kenngröße von Kunststoffen ist abhängig vom spezifischen Oberflächenwiderstand des Materials und wird entsprechend der DIN EN 61340-5-1 unterteilt.

Der Oberflächenwiderstand in Ω [Ohm] wurde gemäß DIN IEC 60093 an Rundplatten des zu prüfenden Materials mit 50 mm Ø und 1.5 mm Dicke bestimmt. Dazu wurde auf die Rundplatte Silberelektroden aufgedampft. Der Oberflächenwiderstand dient im Rahmen der vorliegenden Erfindung zur Charakterisierung der Anwendungsmöglichkeit von Lacken auf erfindungsgemäßen Erzeugnissen. Übliche Abscheideversuche von z. B. Elektrotauchlacken auf mittels ESTA zu lackierenden Erzeugnissen werden im Labor mit der Strom-Zeit-Kurve verfolgt. Daraus werden integrale Kenngrößen ermittelt. Der mit dem Aufbau der Lackschicht verbundene Anstieg des Oberflächenwiderstandes und die Reduzierung des Stromflusses führen dazu, dass sich relativ gleichmäßige Schichtdicken der Lacke auch auf kompliziert geformten Objekten erzielen lassen. Man bezeichnet das Verhältnis der Schichtdicke von Innen- und Außenbereichen kompliziert geformter Körper als Umgriff. Das Umgriffverhalten wird in speziellen Prüfanordnungen getestet, im Rahmen der vorliegenden Erfindung nach dem BMW-Umgriff nach VDA 621-180. Siehe hierzu: A. Goldschmidt und H.-J. Streitberger, BASF-Handbuch Lackiertechnik, BASF Coatings AG, Vincentz Verlag, Hannover, 2002, Seiten 504 - 507**.**

"Alkyl" bezeichnet im Rahmen der vorliegenden Erfindung eine geradkettige oder verzweigte gesättigte Kohlenwasserstoffgruppe. Wird beispielsweise eine Alkylgruppe oder Polyalkylengruppe mit 1 bis 4 Kohlenstoffatomen eingesetzt, kann diese als eine "Niederalkylgruppe" bezeichnet werden und vorzugsweise Methyl (Me), Ethyl (Et), Propyl, insbesondere n-Propyl und iso-Propyl, Butyl, insbesondere n-Butyl, iso-Butyl, sec-Butyl, tert.-Butyl, umfassen.

Der Fachmann versteht unter Compoundierung (aus dem Englischen: *Compound* = "Mischung") einen Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern, besonders bevorzugt in gleichläufigen Doppelschneckenextrudern, gegenläufigen Doppelschneckenextrudern, Planetwalzenextrudern oder Co-Knetern und umfasst die Verfahrensoperationen Fördern, Aufschmelzen, Dispergieren, Mischen, Entgasen und Druckaufbau. Siehe auch https://de.wikipedia.org/wiki/Compoundierung.

Die im Rahmen dieser Anmeldung genannten Normen beziehen sich auf die zum Anmeldetag dieser Erfindung geltenden Fassung.

### Komponente A)

Das erfindungsgemäß als Komponente A) einzusetzende Polybutylenterephthalat (PBT) [CAS Nr. 24968-12-5] wird aus Terephthalsäure oder ihren reaktionsfähigen Derivaten und Butandiol nach bekannten Methoden hergestellt **(**Kunststoff-Handbuch, Bd. VIII, S. 695 ff, Karl Hanser Verlag, München 1973**).**

Bevorzugt enthält das als Komponente A) einzusetzende PBT mindestens 80 Mol-%, vorzugsweise mindestens 90 Mol-%, bezogen auf die Dicarbonsäure, Terephthalsäurereste.

Das erfindungsgemäß als Komponente A) einzusetzende PBT kann in einer Ausführungsform neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure, 2,5-Furandicarbonsäure.

Das erfindungsgemäß als Komponente A) einzusetzende PBT kann in einer Ausführungsform neben Butandiol bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 1,4-Cyclohexandimethanol, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, I,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan.

Bevorzugt als Komponente A) einzusetzendes PBT hat eine intrinsische Viskosität nach EN-ISO 1628/5 im Bereich von 30 bis 150 cm³/g, besonders bevorzugt im Bereich von 40 bis 130 cm³/g, ganz besonders bevorzugt im Bereich von 50 bis 100 cm³/g, jeweils gemessen im Ubbelohde Viskosimeter in Phenol/o-Dichlorbenzol (1:1 Gew.-Teile) bei 25°C. Die intrinsische Viskosität iV, auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel, vorzugsweise Ameisensäure, m-Kresol, Tetrachlorethan, Phenol, 1,2-Dichlorbenzol, etc., und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Siehe hierzu auch: **http://de.wikipedia.org/wiki/Viskosimetrie und http://de.wikipedia.org/wiki/Mark-Houwink-Gleichung.**

Das erfindungsgemäß bevorzugt als Komponente A) einzusetzende PBT kann auch im Gemisch mit anderen Polymeren eingesetzt werden. Die Herstellung erfindungsgemäß einzusetzender PBT Blends erfolgt durch Compoundieren. Während einer solchen Compoundierung können zudem übliche Additive, insbesondere Entformungsmittel oder Elastomere in der Schmelze zugemischt werden, wodurch die Eigenschaften der Blends verbessert werden.

Erfindungsgemäß bevorzugt einzusetzendes PBT kann als Pocan® B 1300 von der Lanxess Deutschland GmbH, Köln, bezogen werden.

In einer alternativen Ausführungsform kann als Komponente A) wenigstens ein Polyalkylenfuranoat , vorzugsweise Polyethylenefuranoat (PEF) oder Polypropylenefuranoat (PPF) eingesetzt werden. Polyalkylenfuranoate werden vorzugsweise aus Recyclingprozessen gewonnen, indem 2,5-Furandicarbonsäure polymerisiert wird. Als Edukt dient Hydroxymethylfurfural (HMF); Avantium, Amsterdam, The Netherlands. Siehe auch: BioPla Journal, No. 59, 2015, Seiten 12-17**.**

### Komponente B)

Erfindungsgemäß wird die Komponente A) in Kombination mit Komponente B) Polycarbonat (PC) eingesetzt. Vorzugsweise liegen Komponenten A) und B) als Blend vor. Bevorzugt wird Polycarbonat auf Basis von 2,2-Bis(4-hydroxyphenyl)-propan (Bisphenol A), Bis(4-hydroxyphenyl)sulfon (Bisphenol S), Dihydroxydiphenylsulfid, Tetramethylbisphenol A, 1,1-Bis(4-hydroxyphenyl)-3,3,5-trimethylcyclohexan (BPTMC) oder 1,1,1-Tris(4-hydroxyphenyl)-ethan (THPE) eingesetzt. Insbesondere bevorzugt wird PC auf Basis von Bisphenol A [CAS Nr. 25037-45-0] eingesetzt. Die Herstellung erfindungsgemäß einzusetzender PBT-PC Blends erfolgt durch Compoundieren. Während einer solchen Compoundierung können zudem übliche Additive, insbesondere Entformungsmittel oder Elastomere in der Schmelze zugemischt werden, wodurch die Eigenschaften der Blends verbessert werden. Erfindungsgemäß insbesondere bevorzugt einzusetzendes Polycarbonat auf Basis von Bisphenol A kann als Makrolon® 2405 von der Covestro AG, Leverkusen bezogen werden.

### Komponente C)

Als Komponente C) werden Natriumsalze sekundärer Alkansulfonate (SAS) eingesetzt. Sulfonsäuren, bei denen die Restgruppe R aliphatisch ist, bezeichnet man als Alkansulfonsäuren und deren Salze und Ester als Alkylsulfonate oder auch als Alkansulfonate. Erfindungsgemäß als Komponente C) einzusetzende sekundäre Alkansulfonate zeichnen sich durch ein sekundäres C Atom, das neben dem Sulfonat zwei Alkylreste und damit keinen aromatischen Rest - wie im oben beschriebenen Stand der Technik - trägt, aus.

SAS [CAS Nr. 97489-15-1] sind besonders in Europa eine wirtschaftlich wichtige Gruppe von anionischen Tensiden und sind charakterisiert durch ein Isomeren- und Homologengemisch der allgemeinen Formel (I)

R¹-HC(SO₃Na)-R² (I)

worin R¹ und R² unabhängig voneinander jeweils für einen C₁₀ bis C₂₁ Alkylrest stehen. Besonders bevorzugt sind Natriumsalze der Alkansulfonsäure der Formel (I) worin R¹ und R² unabhängig voneinander jeweils für einen C₁₆ - C₁₈ Alkylreste stehen.

SAS erhält man durch Sulfoxidation oder Sulfochlorierung von geradkettigen Paraffinen mit anschließender Neutralisation bzw. Verseifung der Sulfochloride mittels Natronlauge. SAS sind biologisch sehr gut abbaubar und werden bisher überwiegend in Geschirrspülmitteln, Haushaltsreinigern, aber auch in Körperpflegemitteln, bei der Emulsionspolymerisation oder in Feuerlöschmitteln angewendet. Für SAS, die unter der Marke Mersolat® von der Lanxess Deutschland GmbH, Köln vertrieben werden, ist auch die Bezeichnung (C₁₀-C₂₁) Alkansulfonsäurephenylester, bzw. (C₁₆ - C₁₈) Alkansulfonsäurephenylester üblich. Siehe auch **https://de.wikipedia.org/wiki/(C10%E2%80%93C21)Alkansulfons%C3%A4urephenyl ester.**

Vorzugsweise werden SAS in Mengen von 0.5 bis 20 Gewichtsteilen bezogen auf 100 Gewichtsteile der Komponente A) eingesetzt. Erfindungsgemäß bevorzugt einzusetzendes SAS kann beispielsweise bei der Lanxess Deutschland GmbH, Köln, als Mersolat® H95 bezogen werden.

### Komponente D)

In einer bevorzugten Ausführungsform wird zusätzlich zu den Komponenten A), B) und C) noch Komponente D) wenigstens ein **Elastomermodifikator** eingesetzt. Vorzugsweise wird die Komponente D) in Mengen von 1 bis 35 Gewichtsteilen bezogen auf 100 Gewichtsteile der Komponente A) eingesetzt. Bevorzugt als Komponente D) einzusetzende Elastomermodifikatoren umfassen u.a. ein oder mehrere Pfropfpolymerisate von
D.1 wenigstens eines Vinylmonomeren, vorzugsweise 5 bis 95 Gew.-%, besonders bevorzugt 30 bis 90 Gew.-%, auf
D.2 einer oder mehrerer Pfropfgrundlagen mit Glasübergangstemperaturen < 10°C, vorzugsweise < 0°C, besonders bevorzugt <-20°C, vorzugsweise 95 bis 5 Gew.-%, besonders bevorzugt 70 bis 10 Gew.-%. Die Gewichtsprozente beziehen sich auf 100 Gewichtsprozent D).

Die Pfropfgrundlage D.2 hat im allgemeinen eine mittlere Teilchengröße (d50-Wert) im Bereich von 0,05 bis 10 µm, vorzugsweise im Bereich von 0,1 bis 5 µm, besonders bevorzugt im Bereich von 0,2 bis 1 µm.

Monomere D.1 sind vorzugsweise Gemische aus
D.1.1 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-(C₁-C₈)-Alkylester, insbesondere Methylmethacrylat, Ethylmethacrylat und
D.1.2 1 bis 50 Gew.-% Vinylcyanide, insbesondere ungesättigte Nitrile wie Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid. Die Gewichtsprozente beziehen sich in diesem Fall auf 100 Gewichtsprozent D1.

Bevorzugte Monomere D.1.1 sind ausgewählt aus mindestens einem der Monomere Styrol, α-Methylstyrol und Methylmethacrylat, bevorzugte Monomere D.1.2 sind ausgewählt aus mindestens einem der Monomere Acrylnitril, Maleinsäureanhydrid, Glycidylmethacrylat und Methylmethacrylat.

Besonders bevorzugte Monomere sind D.1.1 Styrol und D.1.2 Acrylnitril.

Für die in den Elastomermodifikatoren einzusetzenden Pfropfpolymerisate geeignete Pfropfgrundlagen D.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen D.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß D.1.1 und D.1.2, mit der Maßgabe, dass die Glasübergangstemperatur der Komponente D.2 bei <10°C, vorzugsweise bei <0°C, besonders bevorzugt bei <-10°C liegt.

Besonders bevorzugte Pfropfgrundlagen D.2 sind ABS-Polymerisate (Emulsions-, Masse- und Suspensions-ABS) wobei ABS für Acrylnitril-Butadien-Styrol steht, wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage D.2 beträgt bevorzugt mindestens 30 Gew.-%, besonders bevorzugt mindestens 40 Gew.-% (in Toluol gemessen). Ganz besonders bevorzugt ist ein Kautschuk auf Basis eines Acrylnitril-Butadien-Styrol-Copolymerisats, beispielsweise erhältlich als Novodur® P60 bei der Fa. Ineos Styrolution Group, Frankfurt.

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen D.2 die vorzugsweise Polymerisate aus Acrylsäurealkylestern, gegebenenfalls mit bis zu 40 Gew.-%, bezogen auf D.2 anderen polymerisierbaren, ethylenisch ungesättigten Monomeren enthalten. Zu den bevorzugten polymerisierbaren Acrylsäureestern gehören C₁-C₈-Alkylester, vorzugsweise Methyl-, Ethyl-, Butyl-, n-Octyl- und 2-Ethylhexylester; Halogenalkylester, vorzugsweise Halogen-C₁-C₈-alkyl-ester, vorzugsweise Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland, Michigan, USA, besonders bevorzugt.

Weitere bevorzugt geeignete Pfropfgrundlagen gemäß D.2 sind Silikonkautschuke mit pfropfaktiven Stellen, wie sie in DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Unter solchen mit Styrol-Acrylnitril als Schale kann z. B. Metablen® SRK200 eingesetzt werden. Unter solchen mit Methylmethacrylat als Schale können z. B. Metablen® S2001, Metablen® S2030 und/oder Metablen® SX-005 eingesetzt werden. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage D.2.

Bei cyclischen vernetzenden Monomeren mit mindestens 3 ethylenisch ungesättigten Gruppen ist es vorteilhaft, die Menge auf unter 1 Gew.-% der Pfropfgrundlage D.2 zu beschränken.

Bevorzugte "andere" polymerisierbare, ethylenisch ungesättigte Monomere, die neben den Acrylsäureestern gegebenenfalls zur Herstellung der Pfropfgrundlage D.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage D.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

### Komponente E)

Als Komponente E) enthalten erfindungsgemäße Zusammensetzungen zusätzlich zu den Komponenten A), B), C) und D) oder anstelle von D) wenigstens einen Füll- oder Verstärkungsstoff. Vorzugsweise werden auf 100 Gewichtsteile der Komponente A) Füll- oder Verstärkungsstoffe in Mengen im Bereich von 1 bis 55 Gewichtsteilen eingesetzt.

Vorzugsweise wird wenigstens ein Füll- oder Verstärkungsstoff aus der Reihe Glimmer, Silikat, Quarz, insbesondere Quarzmehl, Talkum [CAS Nr. 14807-96-6], Titandioxid, amorphe Kieselsäuren, Bariumsulfat, Glaskugeln, Glasmehl und/oder faserförmige Füllstoffe und/oder Verstärkungsstoffe auf der Basis von Glasfasern oder Kohlenstofffasern eingesetzt.

Besonders bevorzugt werden Talkum, Glaskugeln oder Glasmehl eingesetzt, ganz besonders bevorzugt Glaskugeln. Im Falle des Einsatzes von Glaskugeln beziehen sich Angaben zur Teilchengrößenverteilung bzw. der Teilchengrößen auf sogenannte oberflächenbasierte Teilchengrößen, jeweils vor Einarbeitung in die thermoplastische Formmasse. Hierbei werden die Durchmesser der Flächen der jeweiligen Glaspartikel mit den Flächen imaginärer sphärischer Teilchen (Kugeln) in Beziehung gesetzt. Dies geschieht mit einem nach dem Prinzip der Laserverdunklung arbeitenden Teilchengrößenanalysator der Fa. Ankersmid (Eye Tech® mit der darin enthaltender EyeTech®-Software und ACM-104 Messzelle, Ankersmid Lab, Oosterhout, Niederlande).

Alle als Komponente E) einzusetzenden Füll- und/oder Verstärkungsstoffe können bedingt durch die Verarbeitung zur Formmasse bzw. zu einem Erzeugnis in diesen einen kleineren d97- bzw. d50-Wert aufweisen, als die ursprünglich eingesetzten Füll- bzw. Verstärkungsstoffe.

Bezüglich der d50 und d97-Werte in dieser Anmeldung, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der
d50-Wert diejenige Partikelgröße ist, unterhalb derer 50% der Partikelmenge liegen (Medianwert) und der

d97-Wert diejenige Partikelgröße ist, unterhalb derer 97% der Partikelmenge liegen.

Die Füll- und Verstärkungsstoffe können einzeln oder als Mischung aus zwei oder mehr unterschiedlichen Füllstoffen und/oder Verstärkungsstoffen eingesetzt werden.

Der als Komponente E) einzusetzende Füll- und/oder Verstärkungsstoff kann in einer bevorzugten Ausführungsform oberflächenmodifiziert sein, besonders bevorzugt mit einem Haftvermittler bzw. Haftvermittlersystem, insbesondere bevorzugt auf Epoxidbasis. Die Vorbehandlung ist jedoch nicht unbedingt erforderlich.

In einer besonders bevorzugten Ausführungsform werden als Komponente E) sphärische Glaskugeln, sogenanntes Spheriglas, eingesetzt.

Die als Komponente E) einzusetzenden Füll- und/oder Verstärkungsstoffe, insbesondere Glaskugeln oder Glasfasern, werden bevorzugt mit einem geeigneten Schlichtesystem oder einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (II)

(X-(CH₂)_{q})ₖ-Si-(O-CᵣH₂ᵣ₊₁)₄₋ₖ (II)

in der die Substituenten folgende Bedeutung haben:
- X:: NH₂-, HO-,

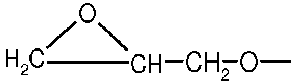

- q:: eine ganze Zahl von 2 bis 10, bevorzugt 3 bis 4,
- r:: eine ganze Zahl von 1 bis 5, bevorzugt 1 bis 2,
- k:: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glaskugeln oder Glasfasern werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% bezogen auf den Füll- bzw. Verstärkungsstoff zur Oberflächenbeschichtung eingesetzt.

Erfindungsgemäß einzusetzende Glaskugeln können als Spheriglass® 3000 CP02 von Potters Industries LLC, Valley Forge, PA 19482, USA, bezogen werden.

### Komponente F)

In einer bevorzugten Ausführungsform wird zusätzlich zu den Komponenten A), B), C), D) und/oder E) oder anstelle von D) oder anstelle von E) noch Komponente F) wenigstens ein **weiteres Additiv** eingesetzt. Vorzugsweise wird die Komponente F) in Mengen von 0,1 bis 20 Gewichtsteilen bezogen auf 100 Gewichtsteile Polyester der Komponente A) eingesetzt.

Bevorzugte weitere Additive im Sinne der vorliegenden Erfindung sind UV-Stabilisatoren, Thermostabilisatoren, Gleit- und Entformungsmittel, von Komponente E) verschiedene Füll- und Verstärkungsstoffe, Nukleierungsmittel, Laserabsorber, di- oder mehrfunktionelle verzweigend oder kettenverlängernd wirkende Additive, Hydrolysestabilisatoren, Antistatika, Emulgatoren, Weichmacher, Verarbeitungshilfsmittel, Fließhilfsmittel, von Komponente D) verschiedene Elastomermodifikatoren und Farbmittel. Die Additive können jeweils alleine oder in Mischung bzw. in Form von Masterbatchen eingesetzt werden.

Als **Gleit- und Entformungsmittel** werden bevorzugt solche ausgewählt aus der Reihe der langkettigen Fettsäuren, der Salze langkettiger Fettsäuren, der Esterderivate langkettiger Fettsäuren sowie Montanwachse.

Bevorzugte langkettige Fettsäuren sind Stearinsäure oder Behensäure. Bevorzugte Salze der langkettigen Fettsäuren sind Ca- oder Zn-Stearat. Bevorzugte Esterderivate langkettiger Fettsäuren sind solche auf Basis von Pentaerythritol, insbesondere C₁₆-C₁₈ Fettsäureester des Pentaerythritols [CAS Nr. 68604-44-4] oder [CAS Nr. 85116-93-4].

Montanwachse im Sinne der vorliegenden Erfindung sind Mischungen aus geradkettigen, gesättigten Carbonsäuren mit Kettenlängen von 28 bis 32 C Atomen. Erfindungsgemäß besonders bevorzugt werden Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Pentaerythritoltetrastearat, Calciumstearat [CAS Nr. 1592-23-0] und/oder Ethylenglycoldimontanat, hier insbesondere Licowax® E [CAS-Nr. 74388-22-0] der Fa. Clariant, Muttenz, Basel ganz besonders bevorzugt ist und Pentaerythritoltetrastearat [CAS-Nr. 115-83-3] z. B. erhältlich als Loxiol® P861 der Fa. Emery Oleochemicals GmbH, Düsseldorf, Deutschland insbesondere ganz besonders bevorzugt ist.

Als **Farbmittel** werden bevorzugt organische Pigmente, bevorzugt Phthalocyanine, Chinacridone, Perylene sowie Farbstoffe, bevorzugt Nigrosin oder Anthrachinone, weiterhin anorganische Pigmente, insbesondere Titandioxid und/oder Bariumsulfat, Ultramarinblau, Eisenoxid, Zinksulfid oder Ruß eingesetzt werden.

Bevorzugt als Komponente F) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Als **Nukleierungsmittel** werden bevorzugt Natrium und Kalium Salze des Acetats, Salicylats, Steareats, Saccharinats, sowie teilverseifte Montanwachse und lonomeren sowie ganz besonders bevorzugt Talkum, sofern nicht bereits als Komponente E) vorhanden eingesetzt, wobei diese Aufzählung nicht abschließend ist.

Als Komponente F) bevorzugt einzusetzende **Thermostabilisatoren** sind ausgewählt aus der Gruppe der sterisch gehinderten Phenole und aliphatisch oder aromatisch substituierten Phosphite sowie verschieden substituierte Vertreter dieser Gruppen.

Unter den sterisch gehinderten Phenolen werden bevorzugt solche mit mindestens einem 3-Tert.-butyl-4-hydroxy-5-methylphenyl- und/oder mindestens einem 3,5-Di-(tert.-butyl-4-hydroxyphenyl)-Baustein eingesetzt, wobei 1,6-Hexandiol-bis[3-(3,5-di-tert.-butyl-4-hydroxyphenyl)-propionat] [CAS-Nr. 35074-77-2] (Irganox® 259 der Fa. BASF SE, Ludwigshafen, Deutschland), Pentaerythril-tetrakis-[3-(3,5-di-tert.-butyl-4-hydroxyphenyl)-propionat] [CAS-Nr. 6683-19-8] (Irganox® 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxaspiro[5.5]undecane [CAS-Nr. 90498-90-1] (ADK Stab® AO 80) besonders bevorzugt sind. ADK Stab® AO 80 ist ein Handelsprodukt der Fa. Adeka-Palmerole SAS, Mulhouse, Frankreich.

Unter den aliphatisch oder aromatisch substituierten Phosphiten wird bevorzugt Tetrakis(2,4-di-tert-butylphenyl)-4,4-biphenyldiphosphonit [CAS Nr. 119345-01-6], das z. B. von der Firma Clariant International Ltd, Muttenz, Schweiz als Hostanox® P-EPQ angeboten wird, Bis(2,4-dicumylphenyl)-pentaerythritol-diphosphit [CAS Nr. 154862-43-8], das z. B. von der Fa. Dover Chemical Corp., Dover, USA unter dem Handelsnamen Doverphos® S9228 angeboten wird, und/oder Tetrakis(2,4-di-tert-butylphenyl)-1,1-biphenyl-4,4'-diylbisphosphonit [CAS Nr. 38613-77-3] eingesetzt.

In bevorzugter Ausführungsform betrifft die vorliegende Erfindung Zusammensetzungen und daraus herzustellende Formmassen sowie Erzeugnisse enthaltend A) Polybutylenterephthalat, B) Polycarbonat und C) wenigstens eine Verbindung der Formel R¹-HC(SO₃Na)-R², worin R¹ und R² jeweils unabhängig voneinander für einen C₁₀ - C₂₁ Alkylrest stehen.

In bevorzugter Ausführungsform betrifft die vorliegende Erfindung Zusammensetzungen und daraus herzustellende Formmassen sowie Erzeugnisse enthaltend A) Polybutylenterephthalat, B) Polycarbonat, C) wenigstens eine Verbindung der Formel R¹-HC(SO₃Na)-R², worin R¹ und R² jeweils unabhängig voneinander für einen C₁₀ - C₂₁ Alkylrest stehen, und E) wenigstens einen Kautschuk auf Basis eines Acrylnitril-Butadien-Styrol Copolymers.

### Verwendung

Die vorliegende Erfindung betrifft aber auch die Verwendung der erfindungsgemäßen Zusammensetzungen, insbesondere in Form von Formmassen, zur Herstellung von Erzeugnissen, die einem elektrostatischen Spritzverfahren (ESTA) unterzogen werden.

### Lackieren

Lackieren kann als das bedeutendste Verfahren zum Auftrag eines Überzugs an industriellen Produktionsgütern angesehen werden. Für den industriellen Einsatz wurden deshalb die unterschiedlichsten Lackierverfahren entwickelt. Mit weitgehend automatisierten Anlagen lassen sich auch Teile in hohen Stückzahlen durch Sprühen, Gießen, Walzen oder Tauchen schnell und gleichmäßig beschichten. Erfindungsgemäß werden die Lackierverfahren aus der Gruppe Niederdruckspritzen, Druckluftspritzen, Höchstdruckspritzen, Heißspritzen, elektrostatisches Spritzen, Tauchlackieren, Gießen und Walzen umfasst.

### Zusammensetzung von Lacken

Anstrichstoffe und Lacke sind Mischungen aus Bindemitteln, Pigmenten, Lösungs- und Verdünnungsmitteln, Füllstoffen sowie Zusatzstoffen. Bindemittel haben die Aufgabe, die Pigmentteilchen untereinander und mit dem zu lackierenden Untergrund zu verbinden. Pigmente sind im Anwendungsmedium praktisch unlösliche, anorganische oder organische, bunte oder unbunte Farbmittel. Löse- und Verdünnungsmittel (z. B. Benzin oder Terpentinöl) sind eine aus einer oder mehreren Komponenten bestehende Flüssigkeit, die das Bindemittel ohne chemische Umsetzung zu lösen vermag. Dadurch wird dem Lack die zum Verarbeiten erforderliche Viskosität gegeben. Füllstoffe sind pulverförmige, im Anwendungsmedium praktisch unlösliche Substanzen, die zum Verändern des Volumens, zum Erzielen oder Verbessern technischer Aspekte und/oder Beeinflussen optischer Eigenschaften dienen. Zusatzstoffe sind u. a. Weichmacher, Trocknungsstoffe, Härter, Netzmittel sowie Mattierungsstoffe. Weichmacher sind wichtige Bestandteile für Lacke, die nachträglich auf umzuformende Teile aufgebracht werden. Härter sind Bestandteile von kratzfesten Lacken.

### Vorbehandlung der Werkstückoberflächen

Die Oberflächen der zu lackierenden Erzeugnisse müssen zumeist vor einer organischen Beschichtung behandelt werden, um eine gute Haftung der Lackschicht auf dem Untergrund, einen störungsfreien Beschichtungsprozess, eine gleichmäßige Ausbildung des Lackfilms sowie eine erhöhte Beständigkeit gegenüber Umwelteinflüssen zu gewährleisten. Bei den Vorbehandlungsverfahren unterscheidet man zwischen mechanischen und chemischen Verfahren.

### Lackierverfahren

Beim Spritzen bzw. Sprühen werden Flüssigkeiten zerstäubt. Dies kann mit Hilfe verschiedener physikalischer Effekte erfolgen. In der Lackiertechnik werden zwei Zerstäubungsprinzipien, die Zerstäubung durch mechanische Kräfte (= Spritzverfahren) und die Zerstäubung durch elektrische Kräfte (= Sprühverfahren) eingesetzt.

Der Wirkungsgrad der verschiedenen Spritzverfahren differiert erheblich. Der vorbeigespritze oder abgelenkte Spritzstrahl wird als Overspray bezeichnet und kann durch erhebliche Lackverluste zu einer schlechten Wirtschaftlichkeit des Verfahrens und zur Verschmutzung der Umwelt führen. Für Hand- und Automatikspritzpistolen zum Lackieren werden viele verschiedene Düsenformen wie die Hohlkegel-Exzenterdüse, die Axial-Vollkegeldüse, die Helix-Hohlkegeldüse, die Bündeldüse, der pneumatische Zerstäuber mit Außenmischung oder der Überschall-Pneumatik-Zerstäuber mit Innenmischung angeboten. Zum Lackauftrag werden im Allgemeinen Zerstäuberdüsen eingesetzt, die die zu überstreichende Fläche voll ausfüllen. Ein Schnitt durch einen pneumatischen Zerstäuber zeigt, dass in ihm die Zerteilung des Lackes in Tropfen, wie auch der Weitertransport, durch an verschiedenen Positionen austretende Luftströme bewirkt wird. Man nennt Düsen, die mit Gas und Flüssigkeit arbeiten, Zweistoffdüsen.

Im Folgenden werden die gebräuchlichsten Lackierverfahren kurz vorgestellt und charakterisiert.

**Niederdruckspritzen:** Dieses Verfahren erfolgt mit speziellen Niederdruckspritzgeräten ("elektr. Spritzpistolen"), die mit einem Spritzdruck von 0,2 - 0,5 bar arbeiten. Hierbei wird die Luft nicht wie beim Druckluftspritzen zusammengepresst, sondern von einem Rotationsgebläse, ohne Zwischenschalten eines Windkessels, sofort zur Pistole geführt. Allgemein wird das Verfahren dort angewendet, wo keine so großen Ansprüche an die Optik der Beschichtung gestellt werden. Es eignet sich zum Verarbeiten dünner oder stark verdünnter Lacke.

Beim **Druckluftspritzen** erfolgen die Verteilung und der Auftrag des Beschichtungsstoffes durch Druckluft (1 bis 5 bar), die frei von Wasser und Öl sein muss. Dazu dienen Spritzpistolen, in denen die Druckluft mit hoher Geschwindigkeit strömt. Mittels eines Düsensystems wird der Beschichtungsstoff angesaugt und in einem Sprühkegel zerstäubt, der den jeweiligen Erfordernissen angepasst werden kann. Das Druckluftspritzen gestattet ziemlich hochviskose, pigmentreiche und lösemittelarme Beschichtungsstoffe zu verspritzen.

**Höchstdruckspritzen (Airless-Spritzen):** Bei diesem Verfahren wird der Beschichtungsstoff hydraulisch ohne Luftbeimengung unter einem Druck von etwa 100 bis 400 bar durch die Spritzdüse gedrückt. Erzeugt wird dieser hohe Druck von einer druckluft- oder elektrisch betriebenen Kolbenpumpe. Das Zerstäuben erfolgt beim Verlassen der Düse. Durch die rasche Expansion in Kombination mit dem Luftwiderstand und dem mechanischen Widerstand entstehen sehr kleine Tropfen. Der Strahl des Beschichtungsstoffes ist frei von Luft. Die der Pistole zugeführte Luft dient der Servosteuerung der Nadel oder zum Sauberblasen. Aufgrund der hohen Durchflussmengen eignet sich das Verfahren für große zusammenhängende Flächen.

Durch **Heißspritzen** lassen sich aufgrund der Viskositätserniedrigung des Lackes mit zunehmender Temperatur problemlos hochviskose, lösemittelarme Lacke verarbeiten. Dies kann durch Druckluftzerstäubung bzw. Airlesszerstäubung mit oder ohne Luftunterstützung erfolgen. Das Erwärmen des Materials auf ca. 55 bis 70°C erfolgt direkt im Becher der Pistole bzw. über Wärmetauscher mit Heißwasser- oder Heißlackumlaufsystem. Heißspritzen ermöglicht hohe Einzelschichtdicken und wird oft in Verbindung mit dem Hochdruckspritzen angewendet.

**Elektrostatisches Spritzen (ESTA):** Zwischen dem zu lackierenden Erzeugnis und Spritzpistole liegt eine Gleichspannung von 30 kV bis 50 kV an, die zum Ausbilden eines starken elektrischen Feldes führt. Sobald der Beschichtungsstoff, vorzugsweise Nasslack (elektrostatische Nasslacklackierung) oder Pulverlack (elektrostatische Pulverlackierung), die Pistolenmündung verlässt, wird er elektrisch aufgeladen und folgt wie magnetisch angezogen den Feldlinien. Da die Beschichtungsstoffteilchen gleichpolig geladen sind, stoßen sie sich im Flug ab, und es entsteht ein homogen versprühter Strahl. Ebenso gleichmäßig schlagen sich die Partikel auf der Oberfläche nieder. Auch Teilchen, die normalerweise vorbeifliegen würden, werden aufgrund der großen Anziehungskraft umgelenkt und zum Werkstück hin beschleunigt.

Erfolgt die Zerstäubung mechanisch, vorzugsweise durch Druckluftspritzen, Airless-Spritzen oder durch Rotationszerstäuber, so spricht man von einer elektrostatisch unterstützten Lackierung. Dabei kann die Aufladung innerhalb (Innenaufladung) oder außerhalb (Außenaufladung) des Sprühorgans erfolgen (siehe auch Corona-Aufladung). Da die Lackpartikel weitgehend dem elektrischen Feldlinienverlauf zwischen Ladeelektrode (Zerstäuber) und Gegenelektrode (geerdetes Werkstück) folgen, arbeitet man bei der elektrostatisch unterstützten Lackierung von Nasslacken mit einem erhöhten Auftragswirkungsgrad im Vergleich zu den nicht elektrostatisch unterstützten Verfahren. Die Lackierfähigkeit ESTA lackierter Erzeugnisse wird wie bereits oben beschrieben durch den sogenannten Umgriff bewertet.

Beim **Tauchlackieren** werden die zu lackierenden Erzeugnisse in den Lack eingetaucht und nachdem sie vollständig benetzt sind, wieder herausgezogen. Da die Erzeugnisse vollständig in den Lack getaucht werden, dürfen sie nicht aufschwimmen, d. h. sie müssen eine größere Dichte als der Lack aufweisen. Beim Eintauchen dürfen keine Luftblasen verbleiben, weil an diesen Stellen sonst kein Lack angenommen wird. Beim Austauchen darf kein Lack mit dem lackierten Erzeugnis ausgeschöpft werden, da größere Lackmengen nur ungenügend aushärten. Auch müssen die zu lackierenden Erzeugnisse vor dem Lackieren vollständig sauber sein! Tauchlackieren eignet sich beim Aufbringen von Grundier- oder Deckschichten mit niedrigen Anforderungen (z. B. bei landwirtschaftlichen Maschinen).

**Gießen:** Bei Gießmaschinen handelt es sich um große Tische, deren Fläche aus Rollen oder Förderbändern besteht, die den zu lackierenden Gegenstand mit variierbarer Geschwindigkeit durch den Lackvorgang transportieren. Der Lack wird dazu mit einer Förderpumpe aus einem Vorratsbehälter in den sogenannten Gießkopf gepumpt. Dies ist ein sich über die ganze Breite der Förderanlange erstreckendes Gefäß mit einem verstellbaren Spalt an der Unterseite durch den der Anstrichstoff in einem breiten kontinuierlichen Farbvorhang senkrecht nach unten bzw. auf das Werkstück läuft. Angewendet wird das Gießverfahren vor allem bei flachen oder gewölbten, sehr großen Gegenständen, die mit dem Walzverfahren nicht lackierbar sind.

Beim **Walzen** wird das Beschichtungsmaterial von rotierenden Gummiwalzen auf die Werkstückoberfläche übertragen. Über einen verstellbaren Spalt zwischen Auftragswalze und Dosierwalze lassen sich die gewünschten Lackauftragsmengen einstellen. Die Werkstückoberflächen können sowohl ein- als auch beidseitig beschichtet werden. Beim Gleichlaufwalzen bewegen sich Werkstück und Lackierwalzen in gleicher Richtung, beim Reservewalzen entgegengesetzt. Mit dem Walzen werden Metallbänder, Möbelteile, Bleche, Konservendosen und Eimer lackiert.

Die vorliegende Erfindung betrifft die Verwendung von Erzeugnissen enthaltend die erfindungsgemäßen Zusammensetzungen im elektrostatischen Spritzverfahren (ESTA).

Die vorliegende Erfindung betrifft zudem die Verwendung lackierter Erzeugnisse enthaltend die erfindungsgemäßen Zusammensetzungen in der Kraftfahrzeugindustrie, vorzugsweise als Karosserieteile in Kraftfahrzeugen, besonders bevorzugt als Kotflügel, Stoßfänger, Tankdeckel, Spoiler, Spiegelgehäuse, Türgriffe sowie weitere Beplankungen im KFZ- und LKW-bereich.

### Herstellverfahren

Die vorliegende Erfindung betrifft aber auch ein Verfahren zur Herstellung von Erzeugnissen, bevorzugt für die Kraftfahrzeugindustrie, indem man erfindungsgemäße Zusammensetzungen zu einer Formmasse vermischt. Zusätzlich können diese Formmassen in Form eines Strangs ausgetragen, bis zur Granulierfähigkeit abkühlt und granuliert werden, bevor sie einem Spritzguss unterzogen werden.

Bevorzugt erfolgt das Vermischen bei Temperaturen im Bereich von 240 bis 310°C, bevorzugt im Bereich von 260 bis 300°C, besonders bevorzugt im Bereich von 270 bis 295°C in der Schmelze. Insbesondere bevorzugt wird hierzu ein Zweiwellenextruder eingesetzt.

In einer Ausführungsform wird das Granulat, das die erfindungsgemäße Zusammensetzung enthält, getrocknet, bevorzugt bei Temperaturen im Bereich um 120°C im Vakuumtrockenschrank oder im Trockenlufttrockner für eine Zeitdauer im Bereich von 2h, bevor es dem Spritzguss zwecks Herstellung erfindungsgemäßer Erzeugnisse unterzogen und anschließend einem Lackierverfahren unterzogen wird.

Die Verfahren des Spritzgusses PBT basierter Formmassen sind dem Fachmann bekannt.

Erfindungsgemäße Verfahren zur Herstellung von PBT basierten Erzeugnissen durch Spritzguss arbeiten bei Schmelzetemperaturen im Bereich von 240 bis 330°C, bevorzugt im Bereich von 260 bis 300°C, besonders bevorzugt im Bereich von 270 bis 290°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass eine die erfindungsgemäßen Zusammensetzungen enthaltende Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Siehe hierzu http://de.wikipedia.org/wiki/Spritzgie%C3%9Fen. Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

### Beispiele

Zum Nachweis der überraschenderweise gefundenen Eigenschaften und der sich daraus ergebenden Möglichkeiten zur Lackierung von Erzeugnissen auf Basis der erfindungsgemäßen Zusammensetzungen wurden zunächst durch Compoundierung entsprechende Polyester Formmassen angefertigt. Die einzelnen Komponenten wurden hierzu in einem Zweiwellenextruder (ZSK 32 Mega Compounder der Fa. Coperion Werner & Pfleiderer (Stuttgart, Deutschland)) bei Temperaturen im Bereich von 260 bis 300°C gemischt, als Strang ausgetragen, bis zur Granulierfähigkeit abgekühlt und granuliert. Nach dem Trocknen (in der Regel 2h bei 120°C im Vakuumtrockenschrank) erfolgte die Verarbeitung des Granulates zu Prüfkörpern.

Die Prüfkörper für die in **Tabelle 1** aufgeführten Untersuchungen wurden auf einer Spritzgießmaschine des Typs Arburg 320-210-500 bei einer Massetemperatur von 260°C und einer Werkzeugtemperatur von 80°C verspritzt:
- Rundplatten Durchmesser 80 mm, Dicke 4 mm

In den Versuchen wurden verwendet:
Komponente A): Lineares Polybutylenterephthalat (Pocan® B 1300, Handelsprodukt der Lanxess Deutschland GmbH, Leverkusen, Deutschland) mit einer Intrinsischen Viskosität von 93 cm³/g (gemessen in Phenol : 1,2-Dichlorbenzol = 1:1 bei 25°C)
Komponente B): Polycarbonat Makrolon® 2405 von der Covestro AG
Komponente C): Mersolat® H95, SDB Nr. 011693, Natriumalkansulfonate [CAS Nr. 68188-18-1], erhältlich von der Lanxess Deutschland GmbH, Köln
Komponente D): Novodur® P60, Acrylnitril-Butadien-Styrol Copolymer, erhältlich bei der INEOS Styrolution Group, Frankfurt
Komponente F): Weitere für die Verwendung in Polyestern gebräuchliche Additive wie zum Beispiel Entformungsmittel (z. B. Pentaerythrit-tetrastearat (PETS)), Thermostabilisatoren z. B. auf Basis von Phenylphosphiten wie Pentaerythrit-tetrakis-[3-(3,5-di-tert.-butyl-4-hydroxyphenyl)-propionat] [CAS-Nr. 6683-19-8] (Irganox® 1010 der Fa. BASF SE) und Nukleierungsmittel z. B.: Talkum, Mistron® R10, erhältlich bei der Imerys Talc Group, Toulouse, Frankreich. Art und Menge der als Komponente F zusammengefassten Additive stimmen in Art und Menge für Beispiele und Vergleichsbeispiele überein.

Die Summe der Anteile der Komponenten ergänzt sich in Tabelle 1 jeweils zu 100 Gew.-%.

**Tabelle 1 (alle Angaben in Gew.-%)**

| | **Beispiel 1** | **Beispiel 2** | **Vergl.-Beispiel 1** |
|---|---|---|---|
| A) | 46,2 | 42,2 | 49,2 |
| B) | 35,0 | 35,0 | 35,0 |
| C) | 3,0 | 7,0 | |
| D) | 15 | 15 | 15 |
| F) | 0,8 | 0,8 | 0,8 |
| **Spez. Oberflächen-widerstand [Ohm]** | 7E+10 | 8E+09 | 4.90E+17 |
| **Umgriff bei ESTA Lackierung** | + | ++ | o |

Die Beispiele zeigen, dass es bei einer Verwendung von Komponente C) gegenüber dem Vergleich ohne Komponente C) zu einer Verringerung des spezifischen Oberflächenwiderstandes von 10⁷ bis 10⁸ kommt. Die dadurch steigende Oberflächenleitfähigkeit befähigt das Material dann im Vergleich zu einem Material ohne Komponente C) elektrostatisch lackiert zu werden. Dies lässt sich in der Praxis durch einen guten Umgriff des Lackes auf der von Lackierpistole abgewandten Seite des Substrates zeigen. Material ohne Komponente C) zeigen hingegen keinen Umgriff. Dabei hat der Zusatz von Komponente C) keinen negativen Einfluss auf die mechanischen Eigenschaften, wie es von anderen Leitfähigkeitsadditiven wie z. B. Ruß und Carbonanotubes (CNT) bekannt ist.

Eine Kombination von PBT als Komponente A) mit den Komponenten B) und C) kann üblicherweise in einer Serienlackierung mitlaufen. Hierdurch können Zeit und Kosten eingespart werden. Schließlich zeichnen sich Erzeugnisse auf Basis erfindungsgemäßer Zusammensetzungen durch eine sehr geringe Wasseraufnahme aus, wodurch eine klimaunabhängige Formstabilität gewährleistet ist.

## Patentansprüche

1. Zusammensetzungen, **dadurch gekennzeichnet, dass** diese
A) Polybutylenterephthalat,
B) Polycarbonat und
C) wenigstens ein sekundäres Alkansulfonat enthalten.

2. Zusammensetzungen gemäß Anspruch 1, **dadurch gekennzeichnet, dass** es sich bei Komponente C) um ein Isomeren- und Homologengemisch der allgemeinen Formel (I)
R¹-HC(SO₃Na)-R² (I)
handelt, worin R¹ und R² jeweils unabhängig voneinander für einen C₁₀ bis C₂₁ Alkylrest stehen.

3. Zusammensetzungen gemäß Anspruch 2, **dadurch gekennzeichnet, dass** R¹ und R² unabhängig voneinander jeweils für einen C₁₆ - C₁₈ Alkylrest stehen.

4. Zusammensetzungen gemäß einem der Ansprüche 1 bis 3, **dadurch gekennzeichnet, dass** ein Polycarbonat auf Basis von 2,2-Bis(4-hydroxyphenyl)-propan, Bis(4-hydroxyphenyl)sulfon, Dihydroxydiphenylsulfid, Tetramethylbisphenol A, 1,1-Bis(4-hydroxyphenyl)-3,3,5-trimethyicyclohexan oder 1,1,1-Tris(4-hydroxyphenyl)-ethan eingesetzt wird, vorzugsweise auf Basis von 2,2-Bis(4-hydroxyphenyl)-propan.

5. Zusammensetzungen gemäß einem der Ansprüche 1 bis 4, **dadurch gekennzeichnet, dass** zusätzlich zu den Komponenten A), B) und C) noch D) wenigstens ein Elastomermodifikator eingesetzt wird.

6. Zusammensetzungen gemäß Anspruch 5, **dadurch gekennzeichnet, dass** der Elastomermodifikator ein oder mehrere Pfropfpolymerisate von
D.1 wenigstens eines Vinylmonomeren auf
D.2 einer oder mehrerer Pfropfgrundlagen mit Glasübergangstemperaturen < 10°C umfasst.

7. Zusammensetzungen gemäß Anspruch 6, **dadurch gekennzeichnet, dass** Propfgrundlagen D.2 ABS-Polymerisate sind, wobei ABS für Acrylnitril-Butadien-Styrol steht.

8. Verfahren zur Herstellung von Erzeugnissen, **dadurch gekennzeichnet, dass** man Zusammensetzungen gemäß einem der Ansprüche 1 bis 7 zu einer Formmasse vermischt.

9. Verfahren gemäß Anspruch 8, **dadurch gekennzeichnet, dass** man die Formmasse in Form eines Strangs austrägt, bis zur Granulierfähigkeit abkühlt und granuliert bevor sie einem Spritzguss unterzieht.

10. Verwendung der Zusammensetzungen gemäß einem der Ansprüche 1 bis 7, zur Herstellung von Erzeugnissen.

11. Verwendung gemäß Anspruch 10, **dadurch gekennzeichnet, dass** es sich um Erzeugnisse in der Kraftfahrzeugindustrie handelt, vorzugsweise Karosserieteile, Kotflügel, Stoßfänger, Tankdeckel, Spoiler, Spiegelgehäuse, Türgriffe sowie weitere Beplankungen im KFZ- und LKW-bereich.

12. Verwendung gemäß Anspruch 10 oder 11, **dadurch gekennzeichnet, dass** die Erzeugnisse im elektrostatischen Spritzverfahren (ESTA) eingesetzt werden.

13. Erzeugnisse, vorzugsweise Erzeugnisse in der Kraftfahrzeugindustrie, **dadurch gekennzeichnet, dass** eine Zusammensetzung gemäß einem der Ansprüche 1 bis 7 enthalten ist.

14. Erzeugnisse gemäß Anspruch 13, **dadurch gekennzeichnet, dass** es sich um Karosserieaußenteile von Kraftfahrzeugen, vorzugsweise um Kotflügel handelt.

## Claims

1. Compositions **characterized in that** these comprise
A) polybutylene terephthalate,
B) polycarbonate and
C) at least one secondary alkanesulfonate.

2. Compositions according to Claim 1, **characterized in that** component C) is an isomer-and-homologue mixture of the general formula (I)
R¹-HC(SO₃Na)-R² (I),
in which R¹ and R² respectively mutually independently are a C₁₀ to C₂₁ alkyl moiety.

3. Compositions according to Claim 2, **characterized in that** R¹ and R² are mutually independently respectively a C₁₆-C₁₈ alkyl moiety.

4. Compositions according to any of Claims 1 to 3, **characterized in that** a polycarbonate based on 2,2-bis(4-hydroxyphenyl)propane, bis(4-hydroxyphenyl) sulfone, dihydroxydiphenyl sulfide, tetramethylbisphenol A, 1,1-bis(4-hydroxyphenyl)-3,3,5-trimethylcyclohexane or 1,1,1-tris(4-hydroxyphenyl)ethane, preferably based on 2,2-bis(4-hydroxyphenyl)propane as follows, is used.

5. Compositions according to any of Claims 1 to 4, **characterized in that** D), at least one elastomer modifier, is also used in addition to components A), B) and C).

6. Compositions according to Claim 5, **characterized in that** the elastomer modifier comprises one or more graft polymers of
D.1 at least one vinyl monomer on
D.2 one or more graft bases with glass transition temperatures < 10°C.

7. Compositions according to Claim 6, **characterized in that** graft bases D.2 are ABS polymers, where ABS is acrylonitrile-butadiene-styrene.

8. Process for the production of products, **characterized in that** compositions according to any of Claims 1 to 7 are mixed to give a moulding material.

9. Process according to Claim 8, **characterized in that** the moulding material is discharged in the form of a strand, cooled until pelletizable, and pelletized before undergoing an injection-moulding procedure.

10. Use of the compositions according to any of Claims 1 to 7 for the production of products.

11. Use according to Claim 10, **characterized in that** the products are products in the motor vehicle industry, preferably bodywork parts, wheel surrounds, bumpers, tank caps, spoilers, mirror housings, door handles, or else other panelling elements in the motor vehicle and heavy goods vehicles sector.

12. Use according to Claim 10 or 11, **characterized in that** the products are used in the electrostatic spraying process (ESTA).

13. Products, preferably products in the motor vehicle industry, **characterized in that** they comprise a composition according to any of Claims 1 to 7.

14. Products according to Claim 13, **characterized in that** the products are external bodywork parts of motor vehicles, preferably being wheel surrounds.

## Revendications

1. Compositions, **caractérisées en ce que** celles-ci contiennent :
A) du polybutylène téréphtalate,
B) du polycarbonate et
C) au moins un alcane-sulfonate secondaire.

2. Compositions selon la revendication 1, **caractérisées en ce que** le composant C) consiste en un mélange d'isomères et d'homologues de la formule générale (I)
R¹-HC(SO₃Na)-R² (I)
dans laquelle R¹ et R² représentent chacun indépendamment l'un de l'autre un radical alkyle en C₁₀ à C₂₁.

3. Compositions selon la revendication 2, **caractérisées en ce que** R¹ et R² représentent chacun indépendamment l'un de l'autre un radical alkyle en C₁₆-C₁₈.

4. Compositions selon l'une quelconque des revendications 1 à 3, **caractérisées en ce qu'**un polycarbonate à base de 2,2-bis(4-hydroxyphényl)-propane, de bis(4-hydroxyphényl)sulfone, de sulfure de dihydroxydiphényle, de tétraméthylbisphénol A, de 1,1-bis(4-hydroxyphényl)-3,3,5-triméthylcyclohexane ou de 1,1,1-tris(4-hydroxyphényl)-éthane est utilisé, de préférence à base de 2,2-bis(4-hydroxyphényl)-propane.

5. Compositions selon l'une quelconque des revendications 1 à 4, **caractérisées en ce qu'**encore D) au moins un modificateur élastomère est utilisé en plus des composants A), B) et C).

6. Compositions selon la revendication 5, **caractérisées en ce que** le modificateur élastomère comprend un ou plusieurs polymères greffés de D.1 au moins un monomère de vinyle sur D.2 une ou plusieurs bases de greffage ayant des températures de transition vitreuse < 10 °C.

7. Compositions selon la revendication 6, **caractérisées en ce que** les bases de greffage D.2 sont des polymères d'ABS, ABS signifiant acrylonitrile-butadiène-styrène.

8. Procédé de fabrication d'articles, **caractérisé en ce que** des compositions selon l'une quelconque des revendications 1 à 7 sont mélangées en un matériau de moulage.

9. Procédé selon la revendication 8, **caractérisé en ce que** le matériau de moulage est déchargé sous la forme d'un boudin, refroidi jusqu'à ce qu'il puisse être granulé et granulé avant d'être soumis à un moulage par injection.

10. Utilisation des compositions selon l'une quelconque des revendications 1 à 7, pour la fabrication d'articles.

11. Utilisation selon la revendication 10, **caractérisée en ce qu'**il s'agit d'articles dans l'industrie automobile, de préférence de parties de carrosserie, d'ailes, de pare-chocs, de bouchons de réservoir, de becquets, de boîtiers de rétroviseur, de poignées de porte, ainsi que d'autres panneaux dans le domaine des automobiles et des camions.

12. Utilisation selon la revendication 10 ou 11, **caractérisée en ce que** les articles sont utilisés dans le procédé de pulvérisation électrostatique (ESTA).

13. Articles, de préférence articles dans l'industrie automobile, **caractérisés en ce qu'**une composition selon l'une quelconque des revendications 1 à 7 est contenue.

14. Articles selon la revendication 13, **caractérisés en ce qu'**il s'agit de parties extérieures de carrosserie de véhicules automobiles, de préférence d'ailes.
